# EUROPÄISCHE PATENTSCHRIFT

(11) **EP 3 137 245 B1**
(45) Veröffentlichungstag und Bekanntmachung des Hinweises auf die Patenterteilung: **06.02.2019**
(21) Anmeldenummer: 15724929.3
(22) Anmeldetag: 30.04.2015
(51) Int. Cl.: B22C 1/22, B22C 9/02

(54) **FORMSTOFFMISCHUNG ENTHALTEND RESOLE UND AMORPHES SILICIUMDIOXID, AUS DIESEN HERGESTELLTE FORMEN UND KERNE UND VERFAHREN ZU DEREN HERSTELLUNG**
MOULD MATERIAL MIXTURE CONTAINING RESOLS AND AMORPOUS SILICON DIOXIDE, MOULDS AND CORES PRODUCED THEREFROM AND METHOD FOR THE PRODUCTION THEREOF
MÉLANGES DE MATÉRIAUX DE MOULAGE CONTENANT DES RÉSOLS ET DU DIOXYDE DE SILICIUM AMORPHE, MOULES ET NOYAUX FABRIQUÉS À PARTIR DE CES MÉLANGES ET PROCÉDÉ POUR LES FABRIQUER

(30) Priorität: 02.05.2014 DE 102014106177
(43) Veröffentlichungstag der Anmeldung: 08.03.2017
(73) Patentinhaber: ASK Chemicals GmbH, 40721 Hilden (DE)
(72) Erfinder: KÖRSCHGEN, Jörg, 42799 Leichlingen (DE); PRIEBE, Christian, 42489 Wülfrath (DE); VACELET, Pierre-Henri, F-27950 Saint Marcel (FR)
(74) Vertreter: Müller Schupfner & Partner Patent- und Rechtsanwaltspartnerschaft mbB
(86) Internationale Anmeldenummer: PCT/DE2015/000207
(87) Internationale Veröffentlichungsnummer: WO 2015/165436

(56) Entgegenhaltungen:
- EP-A2- 0 323 096
- DE-A1-102012 020 511
- US-B1- 6 365 646

## Beschreibung

Die Erfindung betrifft Formstoffmischungen zur Herstellung von Formen und Kernen für den Metallguss umfassend zumindest einen Feuerfeststoff, ein Bindemittel bzw. eine Bindemittelkomponente auf der Basis von alkalischen Resolen und Wasser sowie amorphes Siliciumdioxid als Additiv. Weiterhin betrifft die Erfindung ein Verfahren zur Herstellung von Formen und Kernen unter Verwendung der Formstoffmischungen sowie nach diesem Verfahren unter Aushärtung der Formstoffmischungen hergestellte Formen und Kerne für den Metallguss.

### Stand der Technik

Gießformen setzen sich im Wesentlichen aus Formen oder Formen und Kernen zusammen, welche die Negativform des herzustellenden Gussstücks darstellen. Diese Formen und Kerne bestehen dabei in der Regel aus einem feuerfesten Material, beispielsweise Quarzsand, und einem geeigneten Bindemittel, das der Gießform nach der Entnahme aus dem Formwerkzeug eine ausreichende mechanische Festigkeit verleiht. Der feuerfeste Formgrundstoff liegt bevorzugt in rieselfähiger Form vor, so dass er nach dem Mischen mit dem Bindemittel in eine geeignete Hohlform eingefüllt, verdichtet und danach ausgehärtet werden kann. Nach dem Aushärten sorgt das Bindemittel für einen festen Zusammenhalt zwischen den Partikeln des Formgrundstoffs, so dass die Gießform die erforderliche mechanische Stabilität erhält.

Formen bilden beim Gießen die äußere Wandung für das Gussstück, Kerne werden zur Ausbildung von Hohlräumen innerhalb des Gussstücks eingesetzt. Dabei ist es nicht zwingend notwendig, dass Formen und Kerne aus demselben Material bestehen. So erfolgt z.B. beim Kokillenguss die äußere Formgebung der Gussstücke mit Hilfe metallischer Dauerformen. Auch ist eine Kombination von Formen und Kernen, die aus unterschiedlich zusammengesetzten Formstoffmischungen und nach unterschiedlichen Verfahren hergestellt wurden, möglich. Wenn nachstehend vereinfachend nur von Formen gesprochen wird, gelten die Aussagen in gleichem Maße auch für Kerne (und umgekehrt), die auf einer gleichen Formstoffmischung basieren und nach demselben Verfahren hergestellt wurden.

Zur Herstellung von Formen können organische, anorganische und gemischt organisch/anorganische Bindemittel (Hybridsysteme) eingesetzt werden, deren Aushärtung jeweils durch kalte oder heiße Verfahren erfolgen kann. Als kalte Verfahren bezeichnet man dabei solche Verfahren, welche im Wesentlichen ohne Beheizen des zur Kernherstellung verwendeten Formwerkzeugs durchgeführt werden, i.d.R. bei Raumtemperatur, der durch die Einleitung warmer Gase oder bei einer durch eine exotherme Reaktion verursachten Temperatur. Die Aushärtung erfolgt beispielsweise dadurch, dass ein Gas durch die zu härtende Formstoffmischung geleitet wird und dabei eine chemische Reaktion auslöst. Bei heißen Verfahren wird die Formstoffmischung nach der Formgebung z.B. durch ein beheiztes Formwerkzeug auf eine ausreichend hohe Temperatur erhitzt, um das im Bindemittel enthaltene Lösemittel auszutreiben und/oder um eine chemische Reaktion zu initiieren, durch welche das Bindemittel ausgehärtet wird.

Eine bedeutende Stellung in der Formproduktion nimmt das organische Polyurethan (PU) - Coldbox-Verfahren ein, bei dem ein zwei Komponenten (2-K) Bindemittel bestehend aus einer Polyolkomponente und einer Polyisocyanatkomponente durch Einleiten eines gasförmigen oder leicht flüchtigen tertiären Amin wie z.B. Dimethylethylamin als Katalysator zur Reaktion gebracht werden.

Diese PU-basierten Bindemittel haben jedoch den Nachteil, dass die zur Härtungskatalyse verwendeten Amine giftig sind und einen charakteristischen, sehr unangenehmen Geruch verströmen. Beim Arbeiten mit PU-gebundenen Kernen sind deshalb sowohl bei der Formproduktion als auch beim Abguss eine wirkungsvolle Absaugung und eine aufwändige Abluftreinigung vorgeschrieben.

Es wird deshalb nach Alternativen gesucht, die weder bei der Kernherstellung noch beim Abguss Schadstoffe emittieren. Aus diesem Grund ist in den letzten Jahren das Interesse an organisch/anorganischen Hybridsystemen und an rein anorganischen Bindemitteln stark angestiegen.

US 6365646 B1 offenbart ein Bindemittel, bestehend aus Phenolresol und einer Polyisocyanatverbindung, welches in Gegenwart einer wasserfreien, fluorhaltigen Säure sauer aushärtet.

Hybridsysteme, d.h. organische Bindemittel mit nicht unerheblichen anorganischen Anteilen wie z.B. Wasser als Lösemittel, sind beispielsweise in EP 0323096 B2 und in EP 1228128 B1 offenbart.

Es handelt sich dabei um stark alkalische Resolharze, die sich durch Begasen der Formstoffmischung mit CO₂ aushärten lassen und dann als Bindemittel wirken. Wesentliche Bestandteile der in den genannten Patenten beschriebenen Bindemittel sind Oxyanionen, z.B. das Borat-Ion (EP 0323096 B2) bzw. die Kombination aus Borat- und Aluminat-Ion (EP 1228128 B1).

Vergleicht man die Festigkeiten von PU-Coldbox-Bindemitteln, mit denen der CO₂-härtbaren Resole, so zeigt sich, dass die letzteren nicht das Festigkeitsniveau der PU-Coldbox-Bindemittel erreichen und somit ihr Einsatzgebiet im Wesentlichen auf einfache, massive Kerne beschränkt bleibt. Zwar ist das Problem von Emissionen beim Abguss durch den Einsatz der Resole nicht gelöst, im Bereich der Kernherstellung ermöglicht der Einsatz des geruchlosen CO₂ an Stelle der unangenehm riechenden und ggf. schon in geringen Konzentrationen giftigen tertiären Amine und dem zumindest teilweisen Ersatz organischer Lösemittelkomponenten durch Wasser eine bessere Arbeitsatmosphäre.

Es besteht deshalb das Bedürfnis, die CO₂-härtbaren Resole dahingehend weiterzuentwickeln, dass sie ein höheres Festigkeitsniveau erreichen. Dadurch ließen sich auch Kerne mit komplexeren Geometrien herstellen bzw. man könnte bei massiven einfachen Kernen den Bindermittelgehalt absenken, was zum einen die Wirtschaftlichkeit des Verfahrens erhöhen und zum anderen die Menge der beim Guss auftretenden Emissionen reduzieren würde.

Es ist somit Aufgabe der Erfindung, die Eigenschaften der CO₂-härtbaren Resol-Bindermittel zu verbessern, insbesondere das Festigkeitsniveau anzuheben.

### Zusammenfassung der Erfindung

Obige Aufgaben werden durch die Formstoffmischung, das Mehrkomponenten-System bzw. das Verfahren wie in den unabhängigen Patentansprüchen beschrieben gelöst. Vorteilhafte Weiterbildungen sind Gegenstand der abhängigen Patentansprüche oder nachfolgend beschrieben.

Überraschend wurde gefunden, dass die Zugabe von amorphem Siliziumdioxid zu einer Formstoffmischung umfassend zumindest einen feuerfesten Formgrundstoff und CO₂-härtbares, alkalisches Resol und Wasser zu verbesserten Festigkeiten führt und zwar sowohl unmittelbar nach der Formgebung und Härtung als auch nach Lagerung der gehärteten Kerne bei Raumtemperatur für 24 Stunden. Außerdem wirkt sich die Erfindung sowohl auf die Lagerfähigkeit der Formen bei erhöhter Luftfeuchtigkeit positiv aus als auch auf die Festigkeiten nach einer Wärmebehandlung der Kerne, z.B. nach einer Schlichtetrocknung (Aufbringen eines wäßrigen oder alkoholhaltigen Feuerfestüberzuges) bei 80 bis 200°C.

Die erfindungsgemäße Formstoffmischung umfasst mindestens folgende Stoffe:
a) einen feuerfesten Formgrundstoff,
b) ein nicht-ausgehärtetes alkalisches Resol und Wasser als Bindemittel bzw. als Bindemittelkomponente, insbesondere in Form einer wässrigen alkalischen Lösung und weiter bevorzugt mit einem pH-Wert größer 12. und
c) amorphes SiO₂ als Additiv.

Weiterhin betrifft die Erfindung ein Verfahren zur Herstellung einer Form oder eines Kerns umfassend die folgenden Schritte:
a) Vermischen des Bindemittels und des Additivs mit dem Formgrundstoff,
b) Einbringen der in Schritt a) erhaltenen Formstoffmischung in ein Formwerkzeug,
c) Härten der Formstoffmischung im Formwerkzeug und
d) ggf. Entnahme des gehärteten Kerns oder der Form aus dem Formwerkzeug.

### Detaillierte Beschreibung der Erfindung

Als feuerfester Formgrundstoff (nachfolgend auch kurz Formgrundstoff) können für die Herstellung von Gießformen übliche und bekannte Materialien sowie deren Mischungen verwendet werden. Geeignet sind beispielsweise Quarz-, Zirkon- oder Chromerzsand, Olivin, Vermiculit, Bauxit, Schamotte sowie sogenannte künstliche Formgrundstoffe, also Formgrundstoffe, die durch industrielle Verfahren der Formgebung in sphärische oder annähernd sphärische (zum Beispiel ellipsoide) Form gebracht wurden. Beispiele hierfür sind künstliche, spherische, keramische Sande - sogenante Cerabeads® aber auch Spherichrome®, SpherOX®, sowie Mikrohohlkugeln wie Sie unter anderem als Komponente aus Flugaschen isoliert werden können.

Besonders bevorzugt sind Formgrundstoffe, die mehr als 50 Gew.% Quarzsand bezogen auf den feuerfesten Formgrundstoff enthalten. Unter einem feuerfesten Formgrundstoff werden Stoffe verstanden, die einen hohen Schmelzpunkt (Schmelztemperatur) aufweisen. Vorzugsweise ist der Schmelzpunkt des feuerfesten Formgrundstoffs größer als 600°C, bevorzugt größer als 900°C, besonders bevorzugt größer als 1200°C und insbesondere bevorzugt größer als 1500°C.

Der feuerfeste Formgrundstoff macht vorzugsweise größer 80 Gew.%, insbesondere größer 90 Gew.%, besonders bevorzugt größer 95 Gew.%, der Formstoffmischung aus.

Der mittlere Durchmesser der feuerfesten Formgrundstoffe liegt in der Regel zwischen 100 µm und 600 µm, bevorzugt zwischen 120 µm und 550 µm und besonders bevorzugt zwischen 150 µm und 500 µm. Die Partikelgröße lässt sich z.B. durch Siebung nach DIN ISO 3310 bestimmen. Besonders bevorzugt sind Teilchenformen mit größter Längenausdehnung zu kleinster Längenausdehnung (rechtwinkelig zueinander und jeweils für alle Raumrichtungen) von 1:1 bis 1:5 oder 1:1 bis 1:3, d.h. solche die z.B. nicht faserförmig sind.

Der feuerfeste Formgrundstoff weist vorzugsweise einen rieselfähigen Zustand auf, insbesondere um die erfindungsgemäße Formstoffmischung in üblichen Kernschießmaschinen verarbeiten zu können.

Als weitere Komponente umfasst die erfindungsgemäße Formstoffmischung alkalische Resole in einer Menge von 1 bis 10 Gew. %, bevorzugt von 1 bis 5 Gew. % und besonders bevorzugt von 1 bis 4 Gew. % jeweils bezogen auf das Gewicht des Formgrundstoffs.

Resole im Sinn der vorliegenden Erfindung sind über Methylengruppen (-CH₂-) Gruppen und/oder über Etherbrücken (insbesondere -CH₂-O-CH₂-) miteinander verbundene Aromaten, die jeweils zumindest eine - OH Gruppe tragen (Hydroxy-Aromat). Geeignete Hydroxy-Aromaten sind Phenole, substituierte Phenole, wie z.B. Kresole oder Nonylphenol, 1,2-Dihydroxybenzol (Brenzcatechin), 1,3-Dihydroxybenzol (Resorcin) oder 1,4-Dihydroxybenzol (Hydrochinon) oder phenolische Verbindungen wie z.B. Bisphenol A, jeweils - soweit auch Nicht-Phenole eingesetzt werden - vorzugsweise in Mischung mit Phenol.

Die Resole sind erhältlich z.B. durch Kondensation eines oder mehrerer Hydroxy-Aromaten mit einem oder mehreren Aldehyden, insbesondere in Gegenwart eines basischen Katalysators, wie Ammoniumhydroxid oder eines Alkalimetallhydroxids, hergestellt. Bevorzugt werden Alkalimetallhydroxid-Katalysatoren verwendet.

Als Aldehyde sind geeignet Formaldehyd, Paraformaldehyd, Butyraldehyd, Glyoxal und deren Mischungen. Besonders bevorzugt ist Formaldehyd oder Mischungen enthaltend überwiegend (bezogen auf die molare Menge) Formaldehyd.

Das Molverhältnis von Aldehyd (gegebenenfalls als Formaldehyd) zu Phenol in dem Resolharz kann im Bereich von 1:1 bis 3:1 schwanken, liegt aber bevorzugt im Bereich von 1,6:1 bis 2,5:1.

Die Herstellung von Resolen ist z.B. in der EP 0323096 B2 und EP 1228128 B1 offenbart.

Es sind solche Resole bevorzugt, in denen benachbarte Hydroxy-Aromate jeweils an ortho und/oder para - Position (relativ zur Hydroxy-Gruppe des eingebauten Phenols/Aromaten) über die Methylenbrücken und/oder die Etherbrücken verknüpft sind, d.h. die Mehrzahl der Verknüpfungen erfolgt "para" und/oder "ortho.

Weitere Bindemittel auf Resolbasis werden beispielsweise in US 4426467, US 4474904 und US 4468359 beschrieben. In allen drei Patenten werden die Resole mit Hilfe von Estern ausgehärtet, wobei in den ersten beiden die Härtung durch Zugabe eines flüssigen Härters, z.B. eines Lactons (US 4426467) bzw. von Triacetin (US 4474904), erfolgt, während in US 4468359 die Formstoffmischung zur Härtung des Bindemittels mit einem leichtflüchtigen Ester, z.B. Methylformiat, begast wird. Auch diese Bindemittel lassen sich mit amorphem SiO₂ kombinieren, allerdings ist der festigkeitssteigernde Effekt nicht so ausgeprägt wie bei den CO₂-härtbaren Resolen. Resole, die mit flüssigen Estern aushärten, benötigen nicht notwendig die Zugabe von Oxyanion. Oxyanionen werden aber zur Aushärtung mit CO₂ vorzugsweise eingesetzt.

Die Resole werden in Form einer wässrigen alkalischen Lösung und/oder Aufschlämmung eingesetzt, z.B,. mit einem Feststoffanteil von 30 bis 75 Gew.%., insbesondere ist der pH-Wert größer12 oder sogar größer 13. Die Viskosität der wässrigen alkalischen Lösung beträgt bei 25°C z.B. 100 bis 800 mPas, insbesondere 300 bis 700 mPas Die Viskosität wird mit Hilfe eines Brookfield-Rotationsviskosimeters bestimmt (Spindel 21 und 50 Upm).

Im Rahmen dieser Erfindung werden sauerstoffhaltige Anionen als Oxyanionen bezeichnet. Geeignete borhaltige Oxyanionen sind insbesondere Borate und/oder aluminiumhaltige Oxyanionen z.B. Aluminate, geeignet. Die borhaltigen Oxyanionen können dabei sowohl für sich allein als auch in der Kombination mit aluminiumhaltigen Oxyanionen eingesetzt werden. Letzteres ist bevorzugt.

Die Zugabe der Oxyanionen bei der Bindemittelsynthese kann direkt in Form ihrer Salze erfolgen. Die Salze enthalten vorzugsweise Alkali- oder Erdalkalimetalle als Kation, wobei besonders Natrium- und Kaliumsalze bevorzugt sind. Es ist aber ebenfalls möglich, die Oxyanionen in Situ herzustellen. So bilden sich Aluminate beim Auflösen von Aluminiumverbindungen wie z.B. Aluminiumhydroxid. Eine Lösung einer Borverbindung wie z.B Borsäure in Lauge eignet sich als Lösung eines borhaltigen Oxyanions. Als Lauge dient die Lösung einer Base in Wasser, die ebenfalls zum Mischen mit den Resolen verwendet wird.

Das molare Verhältnis der Oxyanionen (ausgedrückt als B, Al etc.) zu Hydroxy-Aromat-Gruppen liegt vorzugsweise zwischen 0,1:1 und 1:1 und bei ausschließlicher Verwendung eines borhaltigen Oxyanions besonders bevorzugt zwischen 0,3:1 und 0,6:1. Im Falle einer Kombination eines borhaltigen und eines aluminiumhaltigen Oxyanions wird das Atomverhältnis Al : B bevorzugt im Bereich von 0,05 : 1 bis 1 : 1 variiert. Der besonders bevorzugte Bereich liegt dabei zwischen 0,1 : 1 und 0,8 : 1.

Als Base (in der Regel Bestandteil der Resole z.B. aufgrund der Herstellung der Resole) werden bevorzugt Alkalihydroxide wie z.B. Natriumhydroxid und Kaliumhydroxid verwendet. Das molare Verhältnis von Hydroxidionen zu Hydroxy-Aromat-Gruppen (wie Phenol) im Bindemittelsystem beträgt bevorzugt 0,5:1 bis 3:1.

Neben den bereits erwähnten Bestandteilen enthält das Bindemittelsystem Wasser, bevorzugt in einer Menge von 25 bis 50 Gew.% bezogen auf das Gewicht der Zusammensetzung. Das Wasser dient zum Lösen der Base und ggf. der Oxyanionen.

Des Weiteren kann das Bindemittel bis zu 25 Gew.% Zusätze wie Alkohole, Glykole, Tenside und Silane enthalten.

Das Bindemittel wird hergestellt, indem die Resole mit der Base, dem Wasser und dem Oxyanion vermischt werden. Es ist möglich, zunächst das Resolharz mit einer wässrigen Lösung der Base zu vermischen und anschließend das oder die Oxyanionen unterzumischen, z.B. als Feststoff oder ebenfalls in Form einer wässrigen Lösung. Es ist ebenfalls möglich, zunächst die Oxyanionen mit zumindest einem Teil der Base und zumindest einem Teil des Wassers zu vermischen und diese Mischung mit dem Resolharz zu vermengen. Anschließend werden ggf. die restliche Base, ggf. das restliche Wasser sowie ggf. die konventionellen Zusätze zugemischt.

Weiterhin enthalten die erfindungsgemäßen Formstoffmischungen einen Anteil eines amorphen SiO₂. Insbesondere handelt es sich um partikuläres amorphes SiO₂. Synthetisch hergestelltes partikuläres amorphes Siliciumdioxid ist besonders bevorzugt.

Bei dem amorphen SiO₂ kann es sich insbesondere um folgende Typen handeln:
a) amorphes SiO₂ erhalten durch Fällung aus einer Alkalisilikatlösung,
b) amorphes SiO₂ erhalten durch Flammhydrolyse von SiCl₄,
c) amorphes SiO₂ erhalten durch Reduktion von Quarzsand mit Koks oder Anthrazit zu Siliciummonoxid mit anschließender Oxidation zu SiO₂,
d) amorphes SiO₂ erhalten aus dem Prozess der thermischen Zersetzung von ZrSiO₄ zu ZrO₂ und SiO₂,
e) amorphes SiO₂ erhalten durch Oxidation von metallischem Si mittels eines sauerstoffhaltigen Gases, und/oder
f) amorphes SiO₂ erhalten durch Schmelzen von kristallinem Quarz mit anschließendem raschem Abkühlen.
c) schließt sowohl Prozesse ein, bei denen das amorphe SiO₂ gezielt als Hauptprodukt hergestellt wird als auch solche, bei denen es als Nebenprodukt anfällt, wie z.B. bei der Produktion von Silicium oder Ferrosilicium.

Als amorphes SiO₂ können sowohl synthetisch hergestellte als auch natürlich vorkommende Kieselsäuren eingesetzt werden. Letztere sind z.B. aus DE 102007045649 bekannt, sind aber nicht bevorzugt, da sie i.d.R. nicht unerhebliche kristalline Anteile enthalten und deshalb als karzinogen eingestuft sind. Unter *synthetisch* wird nicht natürlich vorkommendes amorphes SiO₂ verstanden, d. h. dessen Herstellung eine bewusst durchgeführte chemische Reaktion umfasst, wie sie von einem Menschen veranlasst wird, z.B. die Herstellung von Kieselsolen durch Ionenaustauschprozesse aus Alkalisilikatlösungen, die Ausfällung aus Alkalisilikatlösungen, die Flammhydrolyse von Siliciumtetrachlorid, die Reduktion von Quarzsand mit Koks im Lichtbogenofen bei der Herstellung von Ferrosilicium und Silicium. Das nach den beiden letztgenannten Verfahren hergestellte amorphe SiO₂ wird auch als pyrogenes SiO₂ bezeichnet.

Gelegentlich wird unter synthetischem amorphem Siliziumdioxid nur Fällungskieselsäure (CAS-Nr. 112926-00-8) und flammhydrolytisch hergestelltes SiO₂ (Pyrogenic Silica, Fumed Silica, CAS-Nr. 112945-52-5) verstanden, während das bei der Ferrosilicium- bzw. Siliciumherstellung entstandene Produkt lediglich als amorphes Siliziumdioxid (Silica Fume, Microsilica, CAS-Nr. 69012-64-12) bezeichnet wird. Für die Zwecke der vorliegenden Erfindung wird auch das bei der Ferrosilicium- bzw. Siliciumherstellung entstandene Produkt als synthetisches amorphes SiO₂ verstanden.

Bevorzugt eingesetzt werden Fällungskieselsäuren und pyrogenes, d.h. flammhydrolytisch oder im Lichtbogen hergestelltes Siliziumdioxid. Insbesondere bevorzugt eingesetzt werden durch thermische Zersetzung von ZrSiO₄ hergestelltes amorphes Siliziumdioxid (beschrieben in der DE 102012020509) sowie durch Oxidation von metallischem Si mittels eines sauerstoffhaltigen Gases hergestelltes SiO₂ (beschrieben in der DE 102012020510). Bevorzugt ist auch Quarzglaspulver (hauptsächlich amorphes Siliziumdioxid), das durch Schmelzen und rasches Wiederabkühlen aus kristallinem Quarz hergestellt wurde, so dass die Partikel kugelförmig und nicht splittrig vorliegen (beschrieben in der DE 102012020511).

Die mittlere Primärpartikelgröße des partikulären amorphen Siliziumdioxids kann zwischen 0,05 µm und 10 µm, insbesondere zwischen 0,1 µm und 5 µm, besonders bevorzugt zwischen 0,1 µm und 2 µm betragen. Die Primärpartikelgröße kann z.B. mit Hilfe von dynamischer Lichtstreuung (z.B. Horiba LA 950) bestimmt sowie durch Rasterelektronenmikroskop-Aufnahmen (REM-Aufnahmen mit z.B. Nova NanoSEM 230 der Firma FEI) überprüft werden. Des Weiteren konnten mit Hilfe der REM-Aufnahmen Details der Primärpartikelform bis in die Größenordnung von 0,01 µm sichtbar gemacht werden. Die Siliziumdioxid-Proben wurden für die REM-Messungen in destilliertem Wasser dispergiert und anschließend auf einem mit Kupferband beklebten Aluminiumhalter aufgebracht, bevor das Wasser verdampft wurde.

Des Weiteren wurde die spezifische Oberfläche des partikulären amorphen Siliziumdioxids mithilfe von Gasadsorptionsmessungen (BET-Verfahren) nach DIN 66131 bestimmt. Die spezifische Oberfläche des partikulären amorphen SiO₂ liegt zwischen 1 und 200 m²/g, insbesondere zwischen 1 und 50 m²/g, besonders bevorzugt kleiner 17 m²/g oder sogar kleiner 15 m²/g. Ggfs. können die Produkte auch gemischt werden, z.B. um gezielt Mischungen mit bestimmten Partikelgrößenverteilungen zu erhalten.

Das partikuläre amorphe SiO₂ kann unterschiedliche Mengen an Nebenprodukten enthalten. Beispielhaft seien hier genannt:
- Kohlenstoff im Falle der Reduktion von Quarzsand mit Koks oder Anthrazit,
- Eisenoxide und/oder Si im Falle der Herstellung von Silicium oder Ferrosilicium, und/oder
- ZrO₂ im Falle der thermischen Zersetzung von ZrSiO₄ zu ZrO₂ und SiO₂.
Weitere Nebenprodukte können z.B. Al₂O₃, P₂O₅, HfO₂, TiO₂, CaO, Na₂O und K₂O sein.

Es ist bevorzugt, dass das für die Erfindung verwendete amorphe SiO₂ einen Gehalt an SiO₂ von mindestens 70 Gew.% besitzt, vorzugsweise von mindestens 80 % und insbesondere bevorzugt von mindestens 90 Gew.%.

Die Menge an amorphem SiO₂, die der erfindunsgemäßen Formstoffmischung zugesetzt wird, liegt üblicherweise zwischen 0,05 Gew.% und 3 Gew.%, bevorzugt zwischen 0,1 Gew.% und 2,5 Gew.% und besonders bevorzugt zwischen 0,1 Gew.% und 2 Gew.%, jeweils bezogen auf den Formgrundstoff.

Die Zugabe des amorphen SiO₂ zum Formgrundstoff kann in Form einer wässrigen Paste, als Aufschlämmung in Wasser oder als trockenes Pulver erfolgen. Letzteres wird dabei bevorzugt.

Das amorphe SiO₂ liegt vorzugsweise partikulär vor. Die Teilchengröße des partikulären amorphen Siliziumdioxids beträgt vorzugsweise weniger als 300 µm, bevorzugt weniger als 200 µm, insbesondere bevorzugt weniger als 100 µm und weist z.B. eine mittlere Primärpartikelgröße zwischen 0,05 µm und 10 µm auf. Der Siebrückstand des partikulären amorphen SiO₂ bei einem Durchgang durch ein Sieb mit 125 µm Maschenweite (120 mesh) beträgt vorzugsweise nicht mehr als 10 Gew.%, besonders bevorzugt nicht mehr als 5 Gew.% und ganz besonders bevorzugt nicht mehr als 2 Gew.%. Unabhängig hiervon beträgt der Siebrückstand auf einem Sieb mit einer Maschenweite von 63 µm weniger als 10 Gew.-%, vorzugsweise weniger als 8 Gew.%. Die Bestimmung des Siebrückstands erfolgt dabei nach dem in der DIN 66165 (Teil 2) beschriebenen Maschinensiebverfahren, wobei zusätzlich ein Kettenring als Siebhilfe verwendet wird.

Das nach der vorliegenden Erfindung vorzugsweise eingesetzte partikuläre amorphe Siliziumdioxid hat einen Wassergehalt von kleiner 15 Gew.%, insbesondere kleiner 5 Gew.% und besonders bevorzugt von kleiner 1 Gew.%.

Das partikulare amorphe SiO₂ wird vorzugsweise als Pulver (einschließend Stäube) eingesetzt.

Die Reihenfolge der Zugabe von Resolharz Bindemittel und amorphem SiO₂ zum Formgrundstoff ist nicht entscheidend. Sie kann sowohl vor als auch nach oder zusammen mit dem Bindemittel erfolgen. Vorzugsweise erfolgt aber zuerst die Zugabe des amorphen SiO₂ und dann die Bindemittelzugabe. In jedem Fall darf aber das Bindemittel nicht schon ausgehärtet sein, bevor das amorphe SiO₂ zum Formgrundstoff zugegeben wird.

Die Formstoffmischung kann zusätzlich ggf. weitere Zusätze wie Eisenoxid(e), gemahlene Holzfasern oder mineralische Additive enthalten.

Anhand der folgenden Beispiele soll die Erfindung näher erläutert werden, ohne auf diese beschränkt zu sein.

### Beispiele

### 1. Herstellung der Formstoffmischungen

### 1.1 Ohne Zugabe von amorphem SiO₂

Quarzsand wurde in die Schüssel eines Mischers der Fa. Hobart (Modell HSM 10) eingefüllt. Unter Rühren wurde anschließend das Bindemittel zugegeben und 1 Min. intensiv mit dem Sand vermischt. Der verwendete Sand, die Art des Bindemittels und die jeweilige Zugabemenge sind in Tab. 1 aufgeführt. Die Mengenangaben erfolgen in Gewichtsteilen (GT).

### 1.2. Mit Zugabe von amorphem SiO₂

Es wurde wie unter 1.1 angegeben verfahren mit dem Unterschied, dass zuerst partikuläres amorphes SiO₂ für 1 min untergemischt wurde und dann die Bindemittelzugabe erfolgte. Der Typ des amorphen SiO₂ und die Zugabemengen sind in Tab. 1 aufgeführt.

**Tab.1**

| | Quarzsand H 32^{a)} [GT] | Bindemittel ^{b)} [GT] | amorphes SiO₂ [GT] | |
|---|---|---|---|---|
| 1.1 | 100 | 2,5 | | nicht erfindungsgemäß |
| 1.2 | 100 | 2,5 | 0,5^{c)} | erfindungsgemäß |
| 1.3 | 100 | 2,5 | 1^{c)} | erfindungsgemäß |
| 1.4 | 100 | 2,5 | 0,5^{d)} | erfindungsqemäß |
| 1.5 | 100 | 2,5 | 1^{d)} | erfindungsgemäß |
| a) Quarzwerke Frechen GmbH | | | | |
| b) Novanol 240 (ASK Chemicals GmbH) | | | | |
| c) Microsilica 971 U (Elkem AS; Herstellung: Produktion von Silicium/Ferrosilicium | | | | |
| d) Microsilica POS B-W 90 LD (Possehl Erzkontor GmbH, | | | | |
| Herstellungsprozess: Produktion von ZrO₂ uns SiO₂ aus ZrSiO₄ | | | | |

### 2. Herstellung der Prüfkörper

Ein Teil einer nach 1.1 bzw. 1.2 hergestellten Formstoffmischung wurde in die Vorratskammer einer Kernschießmaschine H 1 der Röper Gießereimaschinen GmbH, Viersen, überführt. Der Rest der Formstoffmischung wurde bis zum Wiederauffüllen der Kernschießmaschine zum Schutz vor dem Austrocknen in einem sorgfältig verschlossenen Gefäß aufbewahrt.

Aus der Vorratskammer der Kernschießmaschine wurden die Formstoffmischungen mittels Druckluft (4 bar) in ein mit 2 Gravuren zur Herstellung quaderförmiger Prüfkörper mit den Abmessungen 150x22,36x22,36 mm (sog. Georg-Fischer-Riegel) versehenes Formwerkzeug befördert. Zur Aushärtung wurde für 30 Sekunden 1 Liter CO₂ durch das Formwerkzeug geleitet.

Anschließend wurden die Prüfkörper aus dem Werkzeug genommen und ihre Festigkeiten nach vorgegebenen Zeiten bestimmt. Die Lagerung der Prüfkörper bis zur Festigkeitsbestimmung erfolgte im Labor bei 23°C und 50% rel. Feuchte bzw. in einem Klimaschrank der Fa. Rubarth bei 23°C und 98% rel. Feuchte.

### 3. Erwärmen der Prüfkörper

Jeweils 2 der bei 23°C/50% rel. Luftfeuchte gelagerten Prüfkörper pro Formstoffmischung wurden 10 Min. nach ihrer Herstellung 30 Min. lang im Umluftofen bei 150°C gelagert. Nach der Entnahme aus dem Ofen und nach Abkühlen auf Raumtemperatur (1 Std.) wurden die Festigkeiten bestimmt.

### 4. Schlichten der Prüfkörper

### 4.1. Wasserschlichte (feuerfester Formstoffüberzug)

Jeweils 4 bei 23°C/50% rel. Luftfeuchte gelagerte Prüfkörper pro Formstoffmischung wurden 10 Min. nach ihrer Herstellung 3 Sek. lang in die Wasserschlichte Miratec DC 3 (Handelsprodukt der ASK Chemicals GmbH) getaucht und im Labor zum Trocknen auf ein Gestell gelegt. Nach 30 Min. Lagerung wurden von 2 Prüfkörpern die Festigkeiten bestimmt. Die anderen beiden Prüfkörper wurden zur vollständigen Schlichtetrocknung 30 Min. lang im Umluftofen bei 150°C gelagert. Nach der Entnahme aus dem Ofen und nach Abkühlen auf Raumtemperatur (1 Std.) wurden die Festigkeiten bestimmt.

### 4.2.Alkoholschlichte (feuerfester Formstoffüberzug)

Jeweils 4 bei 23°C/50% rel. Luftfeuchte gelagerte Prüfkörper pro Formstoffmischung wurden 10 Min. nach ihrer Herstellung 3 Sek. lang in die Alkoholschlichte Velvacoat GH 701 (Handelsprodukt der ASK Chemicals GmbH) getaucht und zum Trocknen bei 23°C/50% rel. Luftfeuchte auf einem Gestell gelagert. Nach 30 Min. und 24 Std. Lagerung wurden von jeweils 2 Prüfkörpern die Festigkeiten bestimmt.

### 5. Festigkeitsprüfung

Als Maß für die Festigkeiten der Prüfkörper wurden die Biegefestigkeiten bestimmt. Dazu wurden die Prüfkörper in ein Georg-Fischer-Festigkeitsprüfgerät, ausgerüstet mit einer 3-Punkt-Biegevorrichtung, eingelegt und die Kraft (in N/cm²) gemessen, welche zum Bruch des Prüfkörpers führte.

Die Ergebnisse sind in Tab. 2 aufgelistet.

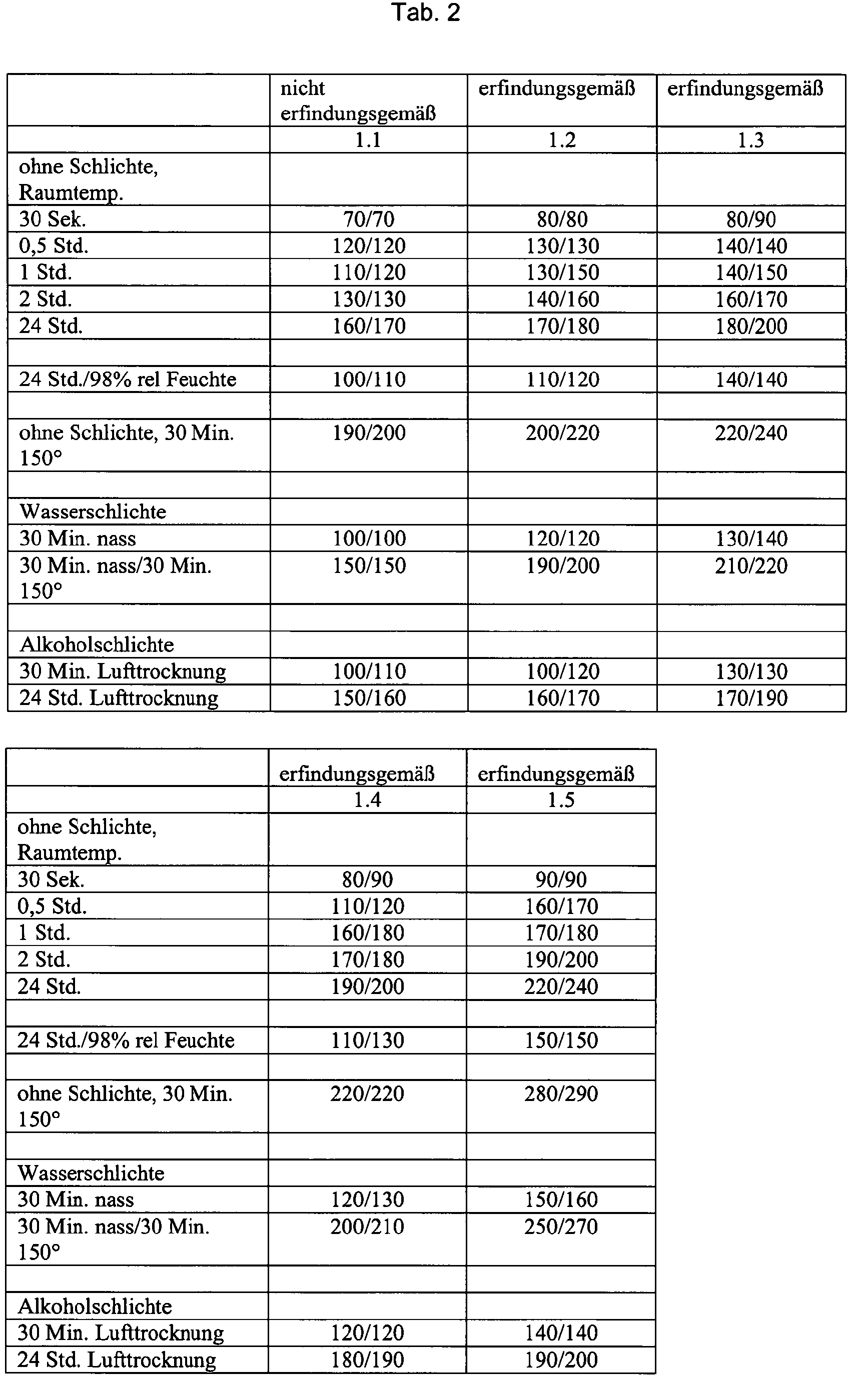

### Ergebnis:

Aus Tab. 2 erkennt man, dass sich die Zugabe von amorphem SiO₂ zu den Formstoffmischungen vorteilhaft auf die Biegefestigkeiten der Prüfkörper auswirkt. Die Wirkung des amorphen SiO₂ erhalten durch thermische Zersetzung von ZrSiO₄ zu ZrO₂ und SiO₂ (Bsp. 1.4 und 1.5) ist dabei größer als die des SiO₂ erhalten aus der Herstellung von Silicium/Ferrosilicium (Bsp. 1.2 und 1.3).

## Patentansprüche

1. Formstoffmischung zur Herstellung von Formen oder Kernen umfassend zumindest:
a) einen feuerfesten Formgrundstoff,
b) alkalische Resole und Wasser als Bindemittel bzw. als Bindemittelkomponente und
c) amorphes SiO₂ als Additiv.

2. Formstoffmischung nach Anspruch 1, wobei die Formstoffmischung durch Zusammenbringen eines Mehrkomponenten-Systems aus zumindest folgenden räumlich separat voneinander vorliegenden Komponenten (A), (B) und (F) herstellbar ist:
(A) amorphes SiO₂ in Pulverform, kein Wasser und kein Resol,
(B) einer Bindemittel-Komponente (B) umfassend das alkalische Resol, Wasser und kein amorphes SiO₂ und
(F) eine schüttfähige Feuerfest-Komponente (F) umfassend einen feuerfesten Formgrundstoff und kein Resol.

3. Mehrkomponenten-System zur Herstellung von Formen oder Kernen umfassend zumindest die folgenden räumlich separat voneinander vorliegenden Komponenten (A), (B) und (F):
(A) amorphes SiO₂ in Pulverform, kein Wasser und kein Resol,
(B) einer Bindemittel-Komponente (B) umfassend das alkalische Resol, Wasser und kein amorphes SiO₂ und
(F) eine schüttfähige Feuerfest-Komponente (F) umfassend einen feuerfesten Formgrundstoff und kein Resol.

4. Formstoffmischung und/oder Mehrkomponenten-System nach zumindest einem der vorhergehenden Ansprüche, wobei der feuerfeste Formgrundstoff Quarz-, Zirkon- oder Chromerzsand, Olivin, Vermiculit, Bauxit, Schamotte, Glasperlen, Glasgranulat, Aluminiumsilikatmikrohohlkugeln und deren Mischungen umfasst und vorzugsweise zu mehr als 50 Gew.% aus Quarzsand bezogen auf den feuerfesten Formgrundstoff besteht.

5. Formstoffmischung und/oder Mehrkomponenten-System nach zumindest einem der vorhergehenden Ansprüche, wobei größer 80 Gew.%, vorzugsweise größer 90 Gew.%, und besonders bevorzugt größer 95 Gew.%, der Formstoffmischung bzw. des Mehrkomponentensystems feuerfester Formgrundstoff sind.

6. Formstoffmischung und/oder Mehrkomponenten-System nach zumindest einem der vorhergehenden Ansprüche, wobei der feuerfeste Formgrundstoff mittlere Partikeldurchmesser von 100 µm bis 600 µm, bevorzugt zwischen 120 µm und 550 µm aufweist, bestimmt durch Siebanalyse.

7. Formstoffmischung und/oder Mehrkomponenten-System nach zumindest einem der vorhergehenden Ansprüche, wobei das amorphe Siliziumdioxid eine nach BET bestimmte Oberfläche zwischen 1 und 200 m²/g, vorzugsweise größer gleich 1 m²/g und kleiner gleich 30 m²/g, besonders bevorzugt von kleiner gleich 15 m²/g, aufweist.

8. Formstoffmischung und/oder Mehrkomponenten-System nach zumindest einem der vorhergehenden Ansprüche, wobei das amorphe Siliziumdioxid aus der Gruppe bestehend aus: Fällungskieselsäure, flammhydrolytisch oder im Lichtbogen hergestelltem pyrogenen Siliziumdioxid, durch thermische Zersetzung von ZrSiO₄ hergestelltem amorphen Siliziumdioxid, durch Oxidation von metallischem Silizium mittels eines sauerstoffhaltigen Gases hergestelltem Siliziumdioxid, Quarzglaspulver mit kugelförmigen Partikeln, das durch Schmelzen und rasches Wiederabkühlen aus kristallinem Quarz hergestellt wurde, und deren Mischungen ausgewählt ist und vorzugsweise durch thermische Zersetzung von ZrSiO₄ hergestelltes amorphes Siliziumdioxid enthält oder daraus besteht.

9. Formstoffmischung und/oder Mehrkomponenten-System nach zumindest einem der vorhergehenden Ansprüche, wobei die Formstoffmischung und das Mehrkomponenten-System das amorphe Siliziumdioxid in Mengen von 0,1 bis 2 Gew.%, vorzugsweise 0,1 bis 1,5 Gew.%, jeweils bezogen auf den Formgrundstoff umfasst.

10. Formstoffmischung und/oder Mehrkomponenten-System nach zumindest einem der vorhergehenden Ansprüche, wobei das amorphe Siliziumdioxid einen Wassergehalt von kleiner 5 Gew.% und besonders bevorzugt kleiner 1 Gew.% aufweist.

11. Formstoffmischung und/oder Mehrkomponenten-System nach zumindest einem der vorhergehenden Ansprüche, wobei das amorphe Siliziumdioxid partikuläres amorphe Siliziumdioxid und vorzugsweise einen mittleren durch dynamische Lichtstreuung bestimmten primären Partikeldurchmesser zwischen 0,05 µm und 10 µm, insbesondere zwischen 0,1 µm und 5 µm und besonders bevorzugt zwischen 0,1 µm und 2 µm aufweist.

12. Formstoffmischung und/oder Mehrkomponenten-System nach zumindest einem der vorhergehenden Ansprüche, wobei die Formstoffmischung und das Mehrkomponenten-System die Resole in einer Menge von 1 bis 10 Gew. %, vorzugsweise 1 bis 5 Gew. % und besonders bevorzugt von 1 bis 4 Gew. %, jeweils bezogen auf das Gewicht des Formgrundstoffs, enthalten.

13. Formstoffmischung und/oder Mehrkomponenten-System nach zumindest einem der vorhergehenden Ansprüche, wobei die Resole CO₂-härtbar sind.

14. Formstoffmischung und/oder Mehrkomponenten-System nach zumindest einem der vorhergehenden Ansprüche, wobei die Formstoffmischung und das Mehrkomponenten-System Oxyanionen enthält, insbesondere 1 bis 4 Gew. %, jeweils bezogen auf das Resolbindemittel, umfassend Resol, Wasser und Base, bevorzug als Bestandteil der Komponente (B).

15. Formstoffmischung und/oder Mehrkomponenten-System nach Anspruch 13, wobei die Oxyanionen Bor und/oder Aluminium enthalten, vorzugsweise beides und das Atomverhältnis Al : B 0,05 : 1 bis 1 : 1, vorzugsweise 0,1 : 1, beträgt.

16. Formstoffmischung und/oder Mehrkomponenten-System nach zumindest einem der vorhergehenden Ansprüche, wobei die Formstoffmischung und das Mehrkomponenten-System zwischen 10 bis 40 Gew.% Basen enthält, bevorzugt Alkalihydroxide, vorzugsweise als Bestandteil der Komponente (B), insbesondere zwischen 10 bis 35% Gew. Basen, besonders bevorzugt zu 12 bis 25 Gew.%.

17. Formstoffmischung und/oder Mehrkomponenten-System nach zumindest einem der vorhergehenden Ansprüche, wobei die Formstoffmischung und das Mehrkomponenten-System Wasser als Bestandteil der Komponente (B) bzw. der Bindemittelkomponente enthält bzw. ausschließlich als Bestandteil der Komponente (B), insbesondere 25 bis 50 Gew.% bezogen auf das Gewicht der Komponente (B).

18. Formstoffmischung und/oder Mehrkomponenten-System nach zumindest einem der vorhergehenden Ansprüche, wobei die Resole in Form einer wässrigen alkalischen Lösung eingesetzt werden, vorzugsweise mit einem Feststoffanteil von 30 bis 75 Gew.%. und auch unabhängig hiervon einem pH-Wert größer 12.

19. Formstoffmischung oder Mehrkomponenten-System nach zumindest einem der vorhergehenden Ansprüche, wobei der Formstoffmischung ein Härter zugesetzt ist, insbesondere zumindest ein alkalisch hydrolisierbarer Ester, vorzugsweise als Bestandteil der Komponente (B) oder als weitere Komponente.

20. Verfahren zur Herstellung von Formen oder Kernen umfassend:
- Bereitstellen der Formstoffmischung durch Zusammenbringen und Mischen der Stoffe bzw. Komponenten gemäß den Ansprüchen 1 bis 19,
- Einbringen der Formstoffmischung in eine Form, und
- Aushärten der Formstoffmischung unter Einbringen von Kohlendioxid in die Form.

21. Verfahren zur Herstellung von Formen oder Kernen umfassend:
- Bereitstellen der Formstoffmischung durch Zusammenbringen und Mischen der Stoffe bzw. Komponenten gemäß den Ansprüchen 1 bis 19
i) umfassend mindestens einen bei Raumtemperatur flüssigen Ester,
- Einbringen der Formstoffmischung in eine Form, und
- Aushärten der Formstoffmischung unter Einbringen
ii) von gasförmigen Estern
in die Form, wobei entweder Merkmale i) und ii) gemeinsam vorliegen oder nur i) oder ii) vorliegt.

22. Verfahren nach Anspruch 20 oder 21, wobei die Formstoffmischung zum Aushärten einer Temperatur von 5 bis 60°C, vorzugsweise von 5 bis 25°C ausgesetzt wird.

23. Form oder Kern herstellbar nach zumindest einem der Ansprüche 20 bis 22 für den Metallguss, insbesondere den Eisen -Guss.

## Claims

1. A mold material mixture for producing molds or cores comprising at least:
a) a refractory basic mold material,
b) alkaline resols and water as a binder or as a binder component and
c) amorphous SiO₂ as additive.

2. The mold material mixture according to claim 1, wherein the mold material mixture is obtainable by bringing together a multicomponent system comprising at least the following components (A), (B) and (F) existing spatially separate from one another:
(A) amorphous SiO₂ in powder form, no water and no resol,
(B) a binder component (B) comprising the alkaline resol, water and no amorphous SiO₂ and
(F) a free-flowing refractory component (F) comprising a refractory basic mold material and no resol.

3. A multicomponent system for producing molds or cores comprising at least the following components (A), (B) and (F) existing spatially separate from one another:
(A) amorphous SiO₂ in powder form, no water and no resol,
(B) a binder component (B) comprising the alkaline resol, water and no amorphous SiO₂ and
(F) a free-flowing refractory component (F) comprising a refractory basic mold material and no resol.

4. The mold material mixture and/or multicomponent system according to at least one of the preceding claims, wherein the refractory basic mold material comprises quartz sand, zirconia sand or chrome sand; olivine, vermiculite, bauxite, fireclay, glass beads, granular glass, aluminum silicate microspheres and mixtures thereof and preferably consists of more than 50 wt.-% quartz sand based on the refractory basic mold material.

5. The mold material mixture and/or multicomponent system according to at least one of the preceding claims, wherein more than 80 wt.-%, preferably more than 90 wt.-%, and particularly preferably more than 95 wt.-%, of the mold material mixture or the multicomponent systems is refractory basic mold material.

6. The mold material mixture and/or multicomponent system according to at least one of the preceding claims, wherein the refractory basic mold material has mean particle diameters of 100 µm to 600 µm, preferably between 120 µm and 550 µm, determined by sieve analysis.

7. The mold material mixture and/or multicomponent system according to at least one of the preceding claims, wherein the amorphous silicon dioxide has a surface area determined by BET of between 1 and 200 m²/g, preferably greater than or equal to 1 m²/g and less than or equal to 30 m²/g, particularly preferably of less than or equal to 15 m²/g.

8. The mold material mixture and/or multicomponent system according to at least one of the preceding claims, wherein the amorphous silicon dioxide is selected from the group consisting of: precipitated silica, pyrogenic silicon dioxide produced by flame hydrolysis or in an electric arc, amorphous silicon dioxide produced by thermal decomposition of ZrSiO₄, silicon dioxide produced by oxidation of metallic silicon with an oxygen-containing gas, quartz glass powder with spherical particles produced from crystalline quartz by melting and rapid recooling, and mixtures thereof and preferably contains or consists of amorphous silicon dioxide produced by thermal decomposition of ZrSiO₄.

9. The mold material mixture and/or multicomponent system according to at least one of the preceding claims, wherein the mold material mixture and the multicomponent system contains the amorphous silicon dioxide in quantities of 0.1 to 2 wt.-%, preferably 0.1 to 1.5 wt.-%, in each case based on the basic mold material.

10. The mold material mixture and/or multicomponent system according to at least one of the preceding claims, wherein the amorphous silicon dioxide has a water content of less than 5 wt.-% and particularly preferably less than 1 wt.-%.

11. The mold material mixture and/or multicomponent system according to at least one of the preceding claims, wherein the amorphous silicon dioxide is particulate amorphous silicon dioxide and preferably has a mean particle diameter, determined by dynamic light scattering, between 0.05 µm and 10 µm, in particular between 0.1 µm and 5 µm and particularly preferably between 0.1 µm and 2 µm.

12. The mold material mixture and/or multicomponent system according to at least one of the preceding claims, wherein the mold material mixture and the multicomponent system contain the resols in a quantity of 1 to 10 wt.-%, preferably 1 to 5 wt.-% and particularly preferably of 1 to 4 wt.-%, in each case based on the weight of the basic mold material.

13. The mold material mixture and/or multicomponent system according to at least one of the preceding claims, wherein the resols are CO₂-curable.

14. The mold material mixture and/or multicomponent system according to at least one of the preceding claims, wherein the mold material mixture and the multicomponent system contain oxyanions, in particular 1 to 4 wt.-%, in each case based on the resol binder comprising resol, water and base, preferably as part of component (B).

15. The mold material mixture and/or multicomponent system according to claim 13, wherein the oxyanions contain boron and/or aluminum, preferably both, and the Al : B atomic ratio is 0.05 : 1 to 1 : 1, preferably 0.1 : 1.

16. The mold material mixture and/or multicomponent system according to at least one of the preceding claims, wherein the mold material mixture and the multicomponent system contains 10 to 40 wt.-% bases, preferably alkali hydroxides, advantageously as a constituent of component (B), in particular between 10 to 35 wt.-% bases, particularly preferably 12 to 25 wt.-%.

17. The mold material mixture and/or multicomponent system according to at least one of the preceding claims, wherein the mold material mixture and the multicomponent system contains water as a constituent of component (B) or as the binder component, or exclusively as a constituent of component (B), in particular 25 to 50 wt.-% based on the weight of component (B).

18. The mold material mixture and/or multicomponent system according to at least one of the preceding claims, wherein the resols are added in the form of an aqueous alkaline solution, preferably with a solids fraction of 30 to 75 wt.-%, and also independently thereof, a pH above 12.

19. The mold material mixture or multicomponent system according to at least one of the preceding claims, wherein a curing agent is added to the mold material mixture, in particular at least one alkaline-hydrolyzable ester, preferably as a constituent of component (B) or as an additional component.

20. A method for producing molds or cores comprising:
- providing the mold material mixture by bringing together and mixing the substances or components according to claims 1 to 19,
- introducing the mold material mixture into a mold, and
- curing the mold material mixture by introducing carbon dioxide into the mold.

21. A method for producing molds or cores comprising:
- providing the mold material mixture by bringing together and mixing the substances or components according to claims 1 to 19
i) comprising at least one ester liquid at room temperature,
- introducing the mold material mixture into a mold, and
- curing the mold mixture by introducing
ii) gaseous esters
into the mold, wherein either features i) and ii) are present jointly or only i) or ii) is present.

22. The method according to claim 20 or 21, wherein the mold material mixture, for curing, is exposed to a temperature of 5 to 60°C, preferably of 5 to 25°C.

23. A mold or core obtainable according to at least one of claims 20 to 22 for metal casting, in particular iron casting.

## Revendications

1. Mélange de matières de moulage pour la fabrication de moules ou de noyaux, comportant au moins :
a) une matière de base de moulage réfractaire ;
b) des résols alcalins et de l'eau comme liant ou comme composant liant ; et
c) SiO₂ amorphe comme additif.

2. Mélange de matières de moulage selon la revendication 1, dans lequel le mélange de matières de moulage est susceptible d'être obtenu par mise en contact d'un système à plusieurs composants fait d'au moins les composants suivants (A), (B) et (F) se présentant de façon séparée les uns des autres dans l'espace :
(A) SiO₂ amorphe sous forme pulvérulente, pas d'eau et pas de résol ;
(B) un composant liant (B) comportant le résol alcalin, de l'eau et pas de SiO₂ amorphe ; et
(F) un composant réfractaire à écoulement libre (F) comportant une matière de base de moulage réfractaire et pas de résol.

3. Système à plusieurs composants pour la fabrication de moules ou de noyaux, comportant au moins les composants suivants (A), (B) et (F) se présentant de façon séparée les uns des autres dans l'espace :
(A) SiO₂ amorphe sous forme pulvérulente, pas d'eau et pas de résol ;
(B) un composant liant (B) comportant le résol alcalin, de l'eau et pas de SiO₂ amorphe ; et
(F) un composant réfractaire à écoulement libre (F) comportant une matière de base de moulage réfractaire et pas de résol.

4. Mélange de matières de moulage et/ou système à plusieurs composants selon au moins l'une des revendications précédentes, dans lequel la matière de base de moulage réfractaire comporte du sable de quartz, de zircon ou de minerai de chrome, de l'olivine, de la vermiculite, de la bauxite, de la chamotte, des perles de verre, des granulés de verre, des microbilles creuses de silicate d'aluminium et leurs mélanges et, de préférence, compose à plus de 50 % en poids de sable de quartz par rapport à la matière de base de moulage réfractaire.

5. Mélange de matières de moulage et/ou système à plusieurs composants selon au moins l'une des revendications précédentes, dans lequel plus de 80 % en poids, de préférence plus de 90 % en poids, et de façon particulièrement préférée, plus de 95 % en poids, du mélange de matières de moulage ou du système à plusieurs composants sont une matière de base de moulage réfractaire.

6. Mélange de matières de moulage et/ou système à plusieurs composants selon au moins l'une des revendications précédentes, dans lequel la matière de base de moulage réfractaire présente un diamètre moyen de particule de 100 *µ*m à 600 *µ*m, de préférence entre 120 *µ*m et 550 *µ*m, déterminé par analyse par tamisage.

7. Mélange de matières de moulage et/ou système à plusieurs composants selon au moins l'une des revendications précédentes, dans lequel le dioxyde de silicium amorphe présente une surface définie selon BET entre 1 et 200 m²/g, de préférence supérieure ou égale à 1 m²/g et inférieure ou égale à 30 m²/g, de façon particulièrement préférée inférieure ou égale à 15 m²/g.

8. Mélange de matières de moulage et/ou système à plusieurs composants selon au moins l'une des revendications précédentes, dans lequel le dioxyde de silicium amorphe est choisi dans le groupe consistant en : silice précipitée, dioxyde de silicium pyrogéné produit par hydrolyse à la flamme ou à l'arc électrique, dioxyde de silicium amorphe produit par décomposition thermique de ZrSiO₄, dioxyde de silicium produit par oxydation de silicium métallique au moyen d'un gaz contenant de l'oxygène, poudre de verre de quartz avec des particules sphériques, qui a été obtenue à partir de quartz cristallin par fusion et refroidissement de retour rapide, et leurs mélanges, et, de préférence, contient du dioxyde de silicium amorphe produit par décomposition thermique de ZrSiO₄ ou se compose de celui-ci.

9. Mélange de matières de moulage et/ou système à plusieurs composants selon au moins l'une des revendications précédentes, dans lequel le mélange de matières de moulage et le système à plusieurs composants comportent le dioxyde de silicium amorphe dans des quantités de 0,1 à 2 % en poids, de préférence de 0,1 à 1,5 % en poids, à chaque fois par rapport à la matière de base de moulage.

10. Mélange de matières de moulage et/ou système à plusieurs composants selon au moins l'une des revendications précédentes, dans lequel le dioxyde de silicium amorphe présente une teneur en eau de moins de 5 % en poids, et de façon particulièrement préférée, de moins de 1 % en poids.

11. Mélange de matières de moulage et/ou système à plusieurs composants selon au moins l'une des revendications précédentes, dans lequel le dioxyde de silicium amorphe est du dioxyde de silicium amorphe particulaire et, de préférence, présente un diamètre moyen de particule primaire, déterminé par diffusion dynamique de la lumière, entre 0,05 *µ*m et 10 *µ*m, en particulier entre 0,1 *µ*m et 5 *µ*m et, de façon particulièrement préférée, entre 0,1 *µ*m et 2 *µ*m.

12. Mélange de matières de moulage et/ou système à plusieurs composants selon au moins l'une des revendications précédentes, dans lequel le mélange de matières de moulage et le système à plusieurs composants contiennent les résols dans une quantité de 1 à 10 % en poids, de préférence de 1 à 5 % en poids et, de façon particulièrement préférée, de 1 à 4 % en poids, à chaque fois par rapport au poids de la matière de base de moulage.

13. Mélange de matières de moulage et/ou système à plusieurs composants selon au moins l'une des revendications précédentes, dans lequel les résols sont durcissables par CO₂.

14. Mélange de matières de moulage et/ou système à plusieurs composants selon au moins l'une des revendications précédentes, dans lequel le mélange de matières de moulage et le système à plusieurs composants contiennent des oxyanions, en particulier 1 à 4 % en poids à chaque fois par rapport au liant résol, comportant le résol, de l'eau et une base, de préférence comme constituant du composant (B).

15. Mélange de matières de moulage et/ou système à plusieurs composants selon la revendication 13, dans lequel les oxyanions contiennent du bore et/ou de l'aluminium, de préférence les deux, et le rapport atomique Al:B s'élève à 0,05:1 à 1:1, de préférence à 0,1:1.

16. Mélange de matières de moulage et/ou système à plusieurs composants selon au moins l'une des revendications précédentes, dans lequel le mélange des matières de moulage et le système à plusieurs composants contiennent entre 10 et 40 % en poids de bases, de préférence des hydroxydes alcalins, de préférence comme constituant du composant (B), en particulier entre 10 et 35 % en poids de bases, de façon particulièrement préférée 12 à 25 % en poids.

17. Mélange de matières de moulage et/ou système à plusieurs composants selon au moins l'une des revendications précédentes, dans lequel le mélange de matières de moulage et le système à plusieurs composants contiennent de l'eau comme constituant du composant (B) ou du composant liant ou exclusivement comme constituant du composant (B), en particulier 25 à 50 % en poids par rapport au poids du composant (B).

18. Mélange de matières de moulage et/ou système à plusieurs composants selon au moins l'une des revendications précédentes, dans lequel les résols sont utilisés sous la forme d'une solution alcaline aqueuse, de préférence avec une fraction en matières solides de 30 à 75 % en poids, et également indépendamment de cela, une valeur de pH supérieure à 12.

19. Mélange de matières de moulage ou système à plusieurs composants selon au moins l'une des revendications précédentes, dans lequel un durcisseur est ajouté au mélange de matières de moulage, en particulier au moins un ester hydrolysable par voie alcaline, de préférence comme constituant du composant (B) ou comme autre composant.

20. Procédé de fabrication de moules ou de noyaux, comportant :
- préparation du mélange de matières de moulage par mise en contact et mélange des substances ou composants selon l'une des revendications 1 à 19 ;
- introduction du mélange de matières de moulage dans un moule ; et
- durcissement du mélange de matières de moulage par introduction de dioxyde de carbone dans le moule.

21. Procédé de fabrication de moules ou de noyaux comportant :
- préparation du mélange de matières de moulage par mise en contact et mélange des substances ou composants selon l'une des revendications 1 à 19
(i) comportant au moins un ester liquide à température ambiante ;
- introduction du mélange de matières de moulage dans un moule ; et
- durcissement du mélange de matières de moulage par introduction
ii) d'esters gazeux ;
dans le moule, les caractéristiques i) et ii) étant présentes conjointement ou seule i) ou ii) étant présente.

22. Procédé selon l'une des revendications 20 ou 21, dans lequel le mélange de matières de moulage, pour le durcissement, est exposé à une température de 5 à 60°C, de préférence de 5 à 25°C.

23. Moule ou noyau susceptible d'être obtenu selon au moins l'une des revendications 20 à 22 pour la coulée de métaux, en particulier pour la coulée de fer.
